# EUROPEAN PATENT APPLICATION

(11) **EP 1 515 326 A2**
(43) Date of publication of application: **16.03.2005**
(21) Application number: 04021564.2
(22) Date of filing: 10.09.2004
(51) Int. Cl.: G11B 7/26

(54) **Spin coating process and manufacturing method of disc-shaped recording medium**

(30) Priority: 10.09.2003 JP 2003318117
(71) Applicant: TDK Corporation, Chuo-ku, Tokyo 103-8272 (JP)
(72) Inventor: Komaki, Tsuyoshi, c/o TDK Corporation, Tokyo 103-8272 (JP)
(74) Representative: HOFFMANN - EITLE

(57) **Abstract**

Disclosed is a spin coating process capable of removing a swelling in the vicinity of an outer peripheral edge by a simple process when forming an ultraviolet curing resin layer (13a). Disclosed also is a method of manufacturing a disc-shaped recording medium, capable of eliminating an influence of the swelling, etc. in the vicinity of an outer peripheral edge of a resin layer such as a light transmissive layer, etc.. The spin coating process involves spin-coating an energy beam curing resin (13) over a resin-formed surface of a disc-shaped member (11), irradiating the resin-formed surface spin-coated with the energy beam curing resin with an energy beam (5a) except the vicinity of an outer peripheral edge thereof, and removing an uncured portion of the energy beam curing resin by applying a solvent to the vicinity of the outer peripheral edge of the resin-formed surface.

## Description

### BACKGROUND OF THE INVENTION

### Field of the Invention

The present invention relates to a spin coating process of coating an energy beam curing resin over a disc-shaped member, and to a method of manufacturing a disc-shaped recording medium that uses the spin coating process.

### Description of the Prior Art

As Japanese Patent Application Laid-Open Publication No.2003-67990 discloses, a multi-layered optical disc has hitherto been developed for gaining a large storage capacity. For example, in a single-sided 2-layered type of Blu-ray Disc, in the case of applying the spin coating process when forming an light transmissive layer of an outermost layer, if a swelling portion is formed on an outer periphery of the light transmissive layer, an allowable height of this swelling portion is within only 10 µm by the standards, and hence it is required that the standards be met by forming the swelling portion with a small height.

### SUMMARY OF THE INVENTION

It is a primary object of the present invention to provide a spin coating process capable of removing a swelling in the vicinity of an outer peripheral edge by a simple process when forming an ultraviolet curing resin layer.

It is another object of the present invention to provide a method of manufacturing a disc-shaped recording medium, capable of eliminating an influence of the swelling or the like in the vicinity of an outer peripheral edge of a resin layer such as a light transmissive layer.

It is a further object of the present invention to provide a method of manufacturing a disc-shaped recording medium, capable of eliminating an influence of the swelling or the like in the vicinity of an outer peripheral edge of a resin layer such as a light transmissive layer.

A spin coating process according to the present embodiment includes a step of spin-coating an energy beam curing resin over a resin-formed surface of a disc-shaped member, a step of irradiating the resin-formed surface spin-coated with the energy beam curing resin with an energy beam except the vicinity of an outer peripheral edge thereof, and a step of removing an uncured portion of the energy beam curing resin by applying a solvent to the vicinity of the outer peripheral edge of the resin-formed surface.

According to the spin coating process, when irradiating the energy beam curing resin surface formed on the resin-formed surface by the spin coat with the energy beam, the irradiation of the energy beam is effected over the energy beam curing resin surface except the vicinity of the outer peripheral edge of the resin-formed surface. It is therefore possible to easily remove the uncured portion of the energy beam curing resin in the vicinity of the outer peripheral edge with the solvent. Accordingly, even when the swelling portion is formed in the vicinity of the outer peripheral edge when conducting the spin coat, the influence of the swelling portion can be eliminated by removing this swelling portion.

Further, the spin coating process further includes a step of further effecting the spin coat to form a different resin layer after forming a layer (such as a recording layer for recording and reproducing in the case of manufacturing the disc-shaped recording medium) on a resin layer formed by curing the energy beam curing resin subsequently to the step of removing the uncured portion. With this contrivance, even when the swelling portion is formed in the vicinity of the outer peripheral edge by the spin coat for the different resin layer, since the swelling portion in the vicinity of the outer peripheral edge of the resin layer formed for the first time has been eliminated as described above, a height of the swelling portion in the vicinity of the outer peripheral edge of the different resin layer can be absorbed.

A first method of manufacturing a disc-shaped recording medium according to the present embodiment includes a step of forming a resin layer having a recording face on a disc-shaped substrate, a step of forming a recessed portion in the vicinity of an outer peripheral edge of the resin layer of the disc-shaped substrate, and a step of forming a recording layer on the resin layer and forming a light transmissive layer on the recording layer.

According to the first method of manufacturing the disc-shaped recording medium, the swelling portion in the vicinity of the light transmissive layer can be absorbed by the recessed portion in the vicinity of the outer peripheral edge of the resin layer on the disc-shaped substrate, and hence the height in the vicinity of the outer peripheral edge of the light transmissive layer can be restricted. The recessed portion forming step can be, as described above, executed by a method of washing the energy beam uncured portion at the outer peripheral edge of the resin layer, a method of crushing the outer peripheral edge of the resin layer by a rotational roller, a method of trimming the outer peripheral edge by the irradiation of a laser beam, and so on.

A second method of manufacturing a disc-shaped recording medium according to the present embodiment includes a step of forming a first recording layer on a first recording face formed on a disc-shaped substrate, and thereafter interposing an energy beam curing resin between the first recording layer on the disc-shaped substrate and a stamper member having a transfer face in a state where the stamper member faces the first recording layer, a step of irradiating the energy beam curing resin with an energy beam between the first recording layer on the disc-shaped substrate and the stamper member except the vicinity of an outer peripheral edge of the disc-shaped substrate, a step of removing an uncured portion of the energy beam curing resin by applying a solvent from the side of an outer peripheral edge face between the disc-shaped substrate and the stamper member, a step of exfoliating the stamper member from the disc-shaped substrate so that a spacer layer formed between the disc-shaped substrate and the stamper member is exposed from the energy beam curing resin, and a step of forming a second recording layer on a second recording face of the spacer layer which is transferred from the transfer face of the stamper member, and thereafter forming a light transmissive layer on the second recording layer by the spin coating.

According to the second method of manufacturing the disc-shaped recording medium, when irradiating the energy beam curing resin with an energy beam between the disc-shaped substrate and the stamper member, the irradiation of the energy beam is performed except the vicinity of an outer peripheral edge of the disc-shaped substrate. Therefore, the energy beam curing resin in the vicinity of the outer peripheral edge of the spacer layer is not cured. Accordingly, when the light transmissive layer is subsequently further formed on the spacer layer by the spin coating and when the swelling portion is formed on the outer peripheral edge portion of the light transmissive layer, it is feasible to eliminate the influence of the swelling portion of the light transmissive layer and to restrict the height of the swelling portion on the outer peripheral edge portion of the light transmissive layer.

The recessed portion is previously formed in the vicinity of the outer peripheral edge of the disc-shaped substrate and/or in the vicinity of the outer peripheral edge of the spacer layer, thereby facilitating the removal washing with the solvent. Moreover, an execution of the exfoliating step can be facilitated by making an outside diameter than the disc-shaped substrate.

It is preferable that the method of manufacturing the disc-shaped recording medium further includes a step of further removing an uncured portion of the energy beam curing resin by applying a solvent to the vicinity of the outer peripheral edge of the spacer layer of the disc-shaped substrate after the exfoliating step. With this contrivance, the uncured portion in the vicinity of the outer peripheral edge can be easily surely removed.

Through each removing step described above, a recessed portion including none of the spacer layer is formed corresponding to the uncured portion in the vicinity of the outer peripheral edge of the disc-shaped substrate. The thus-formed recessed portion in the vicinity of the outer peripheral edge of can absorb the swelling portion in the vicinity of the outer peripheral edge of the light transmissive layer, whereby the height in the vicinity of the outer peripheral edge of the light transmissive layer can be restricted.

A third method of manufacturing a disc-shaped recording medium according to the present embodiment includes a step of forming a first recording layer on a first recording face formed on a disc-shaped substrate, and thereafter interposing an energy beam curing resin between the first recording layer on the disc-shaped substrate and a stamper having a transfer face member in a state where the stamper member faces the first recording layer, a step of irradiating the energy beam curing resin with an energy beam between the first recording layer on the disc-shaped substrate and the stamper member, a step of exfoliating the stamper member from the disc-shaped substrate so that a spacer layer formed between the disc-shaped substrate and the stamper member is exposed from the energy beam curing resin, a step of crushing the outer peripheral edge portion by moving a rotational roller outwardly of the outer peripheral edge portion while pressing the rotational roller against the outer peripheral edge portion of the spacer layer, and a step of forming a second recording layer on a second recording face of the spacer layer which is transferred from the transfer face of the stamper member, and thereafter forming a light transmissive layer on the second recording layer by the spin coating.

According to the third method of manufacturing the disc-shaped recording medium, after curing the energy beam curing resin between the disc-shaped substrate and the stamper member by the irradiation of the energy beam, the outer peripheral edge portion of the spacer layer composed of the energy beam curing resin is crushed, whereby the light transmissive layer is subsequently further formed on the spacer layer by the spin coat. When the swelling portion is formed on the outer peripheral edge portion of the light transmissive layer, it is possible to eliminate the influence of the swelling portion of the light transmissive layer and to restrict the height of the swelling portion on the outer peripheral edge portion of the light transmissive layer. Moreover, the outer peripheral edge portion is crushed in a way that moves the rotational roller outwardly of the outer peripheral edge portion of the spacer layer while pressing the rotational roller against the outer peripheral edge portion, and hence neither cutting wastage nor a burr, etc. occurs on the surface of the spacer layer.

It should be noted that the rotational roller is so moved as to slide obliquely outwardly of the outer peripheral edge portion in a way that makes its axis of rotation inclined to the surface of the spacer layer, whereby the recessed portion with an inclination can be formed in the outer peripheral edge portion of the spacer layer.

A fourth method of manufacturing a disc-shaped recording medium according to the present embodiment includes a step of forming a first recording layer on a first recording face formed on a disc-shaped substrate, and thereafter interposing an energy beam curing resin between the first recording layer on the disc-shaped substrate and a stamper member having a transfer face in a state where the stamper member faces the first recording layer, a step of irradiating the energy beam curing resin with an energy beam between the first recording layer on the disc-shaped substrate and the stamper member, a step of exfoliating the stamper member from the disc-shaped substrate so that a spacer layer formed between the disc-shaped substrate and the stamper member is exposed from the energy beam curing resin, a step of trimming the outer peripheral edge portion by irradiating the outer peripheral edge portion of the spacer layer with a laser beam, and a step of forming a second recording layer on a second recording face of the spacer layer which is transferred from the transfer face of the stamper member, and thereafter forming a light transmissive layer on the second recording layer by the spin coating.

According to the fourth method of manufacturing the disc-shaped recording medium, after curing the energy beam curing resin between the disc-shaped substrate and the stamper member by the irradiation of the energy beam, the outer peripheral edge portion of the spacer layer composed of the energy beam curing resin is trimmed by irradiation of the laser beam, whereby the light transmissive layer is subsequently further formed on the spacer layer by the spin coat. When the swelling portion is formed on the outer peripheral edge portion of the light transmissive layer, it is possible to eliminate the influence of the swelling portion of the light transmissive layer and to restrict the height of the swelling portion on the outer peripheral edge portion of the light transmissive layer. Moreover, the trimming is effected by the irradiation of the laser beam, and therefore neither the cutting wastage nor the burr, etc. occurs.

The outer peripheral edge portion is irradiated with the laser beam in an oblique direction with the inclination to the surface of the spacer layer, whereby the recessed portion with the inclination can be formed in the outer peripheral edge portion of the spacer layer.

In the second through fourth method of manufacturing the disc-shaped recording medium, an execution of the step of interposing the energy beam curing resin can involve spin-coating the energy beam curing resin existing between the disc-shaped substrate and the stamper member in a state where the stamper member faces the disc-shaped substrate after coating the energy beam curing resin over an inner periphery of the first recording face on the disc-shaped substrate.

The step of interposing the energy beam curing resin may be executed in a way that presses the disc-shaped substrate and the stamper member against each other in a state where the energy beam curing resin is interposed between the disc-shaped substrate and the stamper member. In this case, even if a defect such as a sinkage, etc. is formed in the vicinity of the outer peripheral edge of the spacer layer, such a defect can be removed by a simple process, and an adverse effect in a subsequent process can be therefore eliminated.

Further, it is preferable that the stamper member is composed of an olefin resin exhibiting an easy-to-exfoliate property with respect to the energy beam curing resin and energy beam transmissivity.

According to the spin coating process in the present embodiment, when forming the energy beam curing resin layer, the swelling in the vicinity of the outer peripheral edge can be removed by the simple process, and hence the adverse effect in the subsequent process can be eliminated.

According to the method of manufacturing the disc-shaped recording medium in the present embodiment, it is possible to eliminate the influence of the swelling, the defect, etc. due to the spin coat in the vicinity of the outer peripheral edge of the resin layer such as the light transmissive layer, etc..

### BRIEF DESCRIPTION OF THE DRAWINGS

FIGS. 1A to 1C are side sectional views each showing a process of manufacturing a 2-layered optical disc in a first embodiment;
FIGS. 2A to 2C are side sectional views showing processes of manufacturing the 2-layered optical disc, which are executed subsequently to the process in FIG. 1C;
FIGS. 3A to 3C are side sectional views showing processes of manufacturing the 2-layered optical disc, which are executed subsequently to the process in FIG. 2C; FIG. 3D is an enlarged side sectional view showing the vicinity of an outer peripheral edge of the optical disc;
FIGS. 4A to 4C are side sectional views each showing a process of manufacturing the 2-layered optical disc in a second embodiment;
FIGS. 5A to 5C are side sectional views showing processes of manufacturing the 2-layered optical disc in a third embodiment; and
FIG. 6A is a schematic side sectional view of the single-sided 2-layered type optical disc in the second embodiment and in a third embodiment; FIG. 6B is an enlarged side sectional view of the outer peripheral edge portion where a swelling portion is restrained from being formed in the second embodiment.

### DETAILED DESCRIPTION OF THE PREFERRED EMBODIMENTS

A best mode for carrying out the present invention will hereinafter be described with reference to the drawings.

### <First Embodiment>

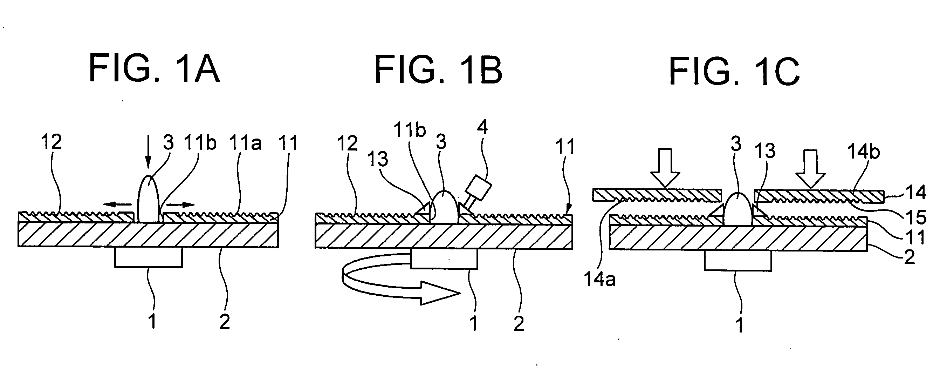

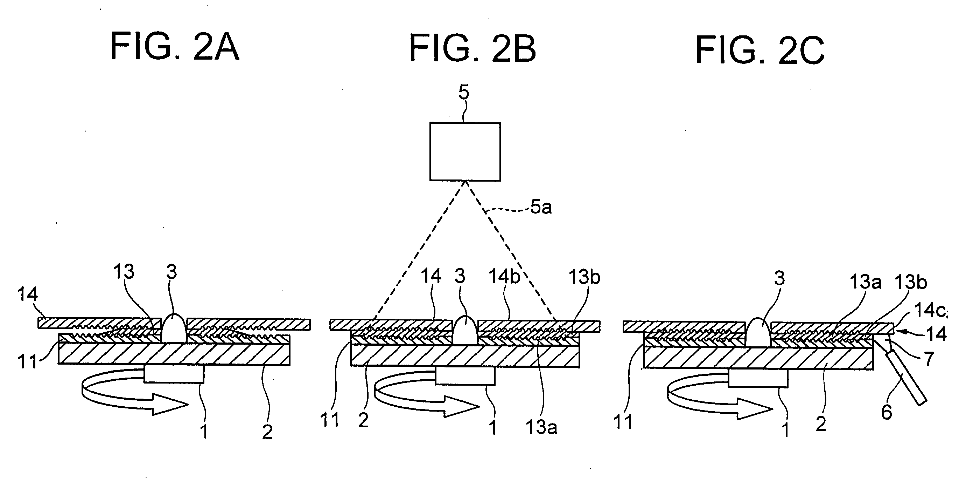

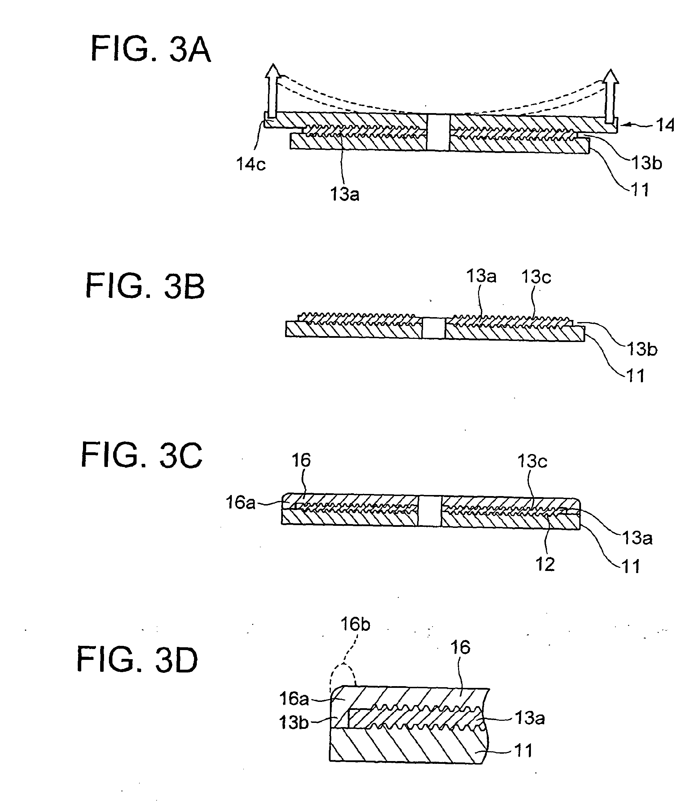

FIGS. 1A to 1C are side sectional views each showing a process of manufacturing a 2-layered optical disc in a first embodiment. FIGS. 2A to 2C are side sectional views showing processes of manufacturing the 2-layered optical disc, which are executed subsequently to the process in FIG. 1C. FIGS. 3A to 3C are side sectional views showing processes of manufacturing the 2-layered optical disc, which are executed subsequently to the process in FIG. 2C. FIG. 3D is an enlarged side sectional view showing the vicinity of an outer peripheral edge of the optical disc.

The first embodiment exemplifies a method of manufacturing a single-sided 2-layered type optical disc. To be specific, as shown in FIG. 1A, a stage 2 for spin coating is so constructed as to be rotated by a motor (unillustrated) through a rotary shaft 1. An elastic deformation retaining member 3 composed of an elastically deformable material for holding a disc-shaped substrate 11, is fixed to a central portion of a top surface of the stage 2. Further, the disc-shaped substrate 11 includes a recording layer formed over a recording face 12 provided with a recording/reproducing rugged portion 11a, and has a central hole 11b. The recording layer consists of a reflection layer, a dielectric layer, an alloy layer, etc..

As shown in FIG. 1A, the elastic deformation retaining member 3 receives insertion of the disc-shaped substrate 11 via the central hole 11b. Thereafter, the elastic deformation retaining member 3 is pressurized enough to get crushed and deformed, and is thus fixed to the stage 2.

Next, as shown in FIG. 1B, an ultraviolet curing resin is discharged over the vicinity of a boundary between the central hole 11b of the disc-shaped substrate 11 and the elastic deformation retaining member 3 from a nozzle 4 in a way that rotates the stage 2 by the motor (unillustrated) through the rotary shaft 1, thus coating the ultraviolet curing resin 13 over the vicinity of an inner periphery of the disc-shaped substrate 11.

Subsequently, as shown in FIG. 1c, a translucent stamper member 14 including a transfer face 15 formed with a recording/reproducing rugged portion 14a is aligned with the central hole 11b of the disc-shaped substrate 11 and is thus superimposed on the disc-shaped substrate 11 so as to receive insertion of the elastic deformation retaining member 3.

The stamper member 14 is composed of an olefin resin that exhibits transmissivity of ultraviolet-rays and has an easy-to-exfoliate property with respect to the ultraviolet curing resin material. An outside diameter of the stamper member 14 is slightly larger than the disc-shaped substrate 11, wherein an outer peripheral edge 14c thereof protrudes therefrom. The stamper member 14 is disposed so that the transfer face 15 thereof faces the recording face 12 of the disc-shaped substrate 11. The stamper member 14 may have the same diameter as the disc-shaped substrate 11 has, however, its diameter is preferably larger than the disc-shaped substrate 11 in order to ensure a gripping area in consideration of the easy-to-exfoliate property.

Next, the stage 2 is rotated at a high speed together with the rotary shaft 1, thereby rotating the disc-shaped substrate 11 and the stamper member 14 at the high speed as shown in FIG. 2A. Then, the ultraviolet curing resin 13 is forced to be directed to the outer periphery side with a centrifugal force and is thereby rotated off the outer peripheral edge between the recording face 12 and the transfer face 15, thus effecting the spin coating till a desired layer thickness is obtained.

Next, as shown in FIG. 2B, a top face 14b of the stamper member 14 is irradiated with ultraviolet-rays 5a (indicated by broken lines in FIG. 2) emitted from an ultraviolet light source 5 for a predetermined period of time in a way that rotates the disc-shaped substrate 11 on the stage 2. The irradiation of the ultraviolet rays cures the ultraviolet curing resin 13 interposed between the recording face 12 of the disc-shaped substrate 11 and the transfer face 15 of the stamper member 14, thereby forming a spacer layer 13a. When thus irradiated with the ultraviolet rays, an irradiation range of the ultraviolet rays 5a upon the ultraviolet curing resin 13 is set so that an outermost peripheral portion 13b is not irradiated with the ultraviolet rays 5a in a way that adjusts a shortest distance from the ultraviolet light source 5 to the top face 14b of the stamper member 14, with the result that the outermost peripheral portion 13b remains uncured. The irradiation range of the ultraviolet rays 51 may be determined based on a balance between a recording area that should be formed for recording and reproducing and an area desired to be formed in a recessed shape in the vicinity of the outer peripheral edge.

Subsequently, as shown in FIG. 2C, while rotating the stage 2 at a low speed, a solvent 7 is discharged over a boundary area, between the stamper member 14 and the disc-shaped substrate 11, extending from a protruded portion of the outer peripheral edge 14c of the stamper member 14 to an outer peripheral edge of the disc-shaped substrate 11, thus washing away the ultraviolet curing resin remaining in the uncured state from the outermost peripheral portion 13b. A recessed portion is formed beforehand in at least one of the vicinity of the outer peripheral edge of the disc-shaped substrate 11 and the vicinity of the outer peripheral edge of the spacer layer 13a, thereby facilitating purging of the ultraviolet curing resin by washing with the solvent. Further, the solvent selected herein is a solvent that can dissolve the ultraviolet curing resin but does not dissolve the disc-shaped substrate 11.

As described above, the ultraviolet curing resin in the uncured state is washed by the solvent 7. Only the uncured ultraviolet curing resin is thus washed away, and a gap is formed between the disc-shaped substrate 11 and the stamper member 14 at the outermost peripheral portion 13b of the spacer layer 13a, with the result that the stamper member 14 becomes easy to exfoliate.

To be specific, as shown in FIG. 3A, the stamper member 14 is raised upward in FIG. 3A at the vicinity of the outer peripheral edge 14a thereof and is thus exfoliated, while the spacer layer 13a is left on the side of the disc-shaped substrate 11. This exfoliation can be easily executed because of the stamper member 14 being easy to exfoliate from the ultraviolet curing resin.

With the exfoliation of the stamper member 14, as shown in FIG. 3B, the recording face 13c onto which the rugged portion 14a of the transfer face 15 of the stamper member 14 is transferred, gets exposed on the surface of the spacer layer 13a. At this time, the outermost peripheral portion 13b of the spacer layer 13a appears as the recessed portion 13b taking the recessed shape in the vicinity of the outer peripheral edge of the disc-shaped substrate 11.

After exfoliating the stamper member 14, the solvent 7 is applied to the outermost peripheral portion 13b of the spacer layer 13a, and the ultraviolet curing resin in the uncured state at the outermost peripheral portion 13b may also be thus washed away.

Next, after forming a recording layer as a second layer on the recording face 13c of the spacer layer 13a, in the same way as FIGS. 1A to 1C and FIGS. 2A to 2C show, the resin material is discharged in the form of droplets along the vicinity of the inner periphery of the spacer layer 13a, and the disc-shaped substrate 11 is rotated at the high speed, whereby a translucent layer 16 is, as shown in FIG. 3C, formed up to a predetermined thickness over the spacer layer 13a by a spin coating process. The recording layer consists of a dielectric layer, an alloy layer, a Si layer, etc..

When forming the translucent layer 16 by the spin coating, the recessed portion 13b is provided at the outermost peripheral portion of the spacer layer 13a, and it is therefore possible to absorb a swelling that is easy to form along the outermost peripheral portion when effecting the spin coating. As a result, the translucent layer 16 is, as shown in FIG. 3C, formed in a way that restrains the swelling from the inner periphery to the outermost peripheral portion 16a.

The recording face 12 is, as shown in FIG. 3C, formed between the disc-shaped substrate 11 and the spacer layer 13a in the manner described above, and another recording face 13c is formed between the spacer layer 13a and the translucent layer 16, whereby the aforementioned single-sided 2-layered type optical disc can be manufactured.

In this type of optical disc, when the translucent layer 16 is formed on the spacer layer 13a by the spin coating process, though a swelling portion 16b has hitherto been formed at the outer peripheral edge portion of the translucent layer 16 as indicated by a broken line in FIG. 3D, this swelling portion 16b is absorbed by the recessed portion 13b according to the first embodiment. Consequently, the outermost peripheral portion 16a of the translucent layer 16 does not come to have the swelling seen in FIG. 3D, thereby making it possible not to be affected by the swelling portion of the translucent layer 16 and to restrict a height of the swelling portion at the outermost peripheral portion 16a of the translucent layer 16 as well. Hence, this contrivance can meet height standards of the swelling portion.

### <Second Embodiment>

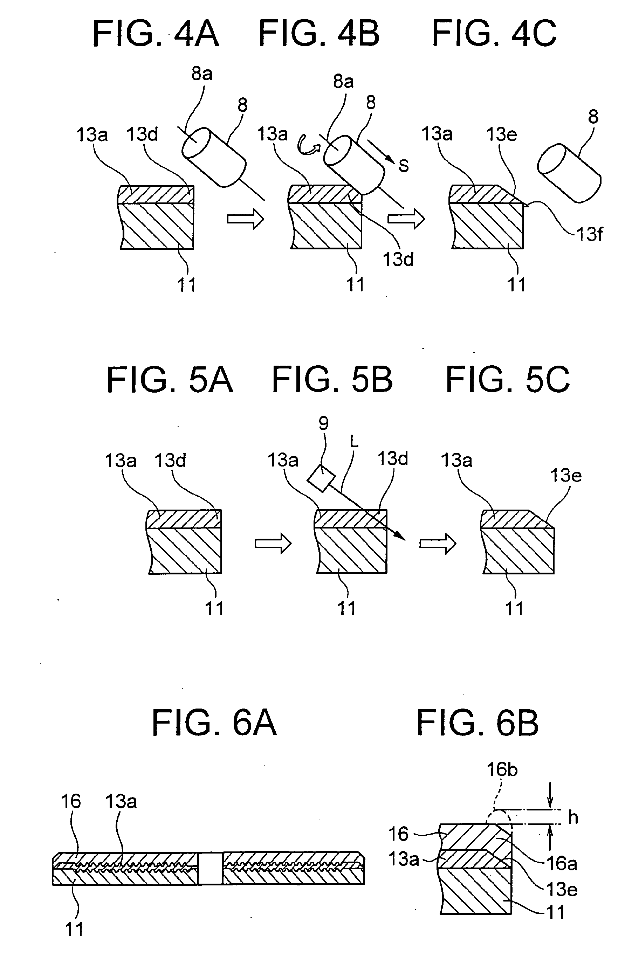

FIGS. 4A to 4C are side sectional views each showing a process of manufacturing the 2-layered optical disc in a second embodiment. FIG. 6A is a schematic side sectional view of the single-sided 2-layered type optical disc in the second embodiment and in a third embodiment as well. FIG. 6B is an enlarged side sectional view of the outer peripheral edge portion where the swelling portion is restrained from being formed in the second embodiment.

The second embodiment exemplifies a method of manufacturing the single-sided 2-layered type optical disc. According to the second embodiment, the optical disc is manufactured in the same processes as those in the first embodiment except the method of forming the recessed portion in the outer peripheral edge of the spacer layer on the disc-shaped substrate as compared with FIGS. 1A through 3C in the first embodiment.

To be specific, referring to FIG. 2B, the top face 14b of the stamper member 14 is irradiated with the ultraviolet-rays 5a emitted from the ultraviolet light source 5 for a predetermined period of time in a way that rotates the disc-shaped substrate 11 on the stage 2. The irradiation of the ultraviolet rays cures the ultraviolet curing resin 13 interposed between the recording face 12 of the disc-shaped substrate 11 and the transfer face 15 of the stamper member 14, thereby forming the spacer layer 13a. When thus irradiated with the ultraviolet rays, the irradiation range of the ultraviolet rays 5a upon the ultraviolet curing resin 13 is set over the entire surface extending to the outermost peripheral portion 13b in a way that adjusts the shortest distance from the ultraviolet light source 5 to the top face 14b of the stamper member 14, with the result that the ultraviolet curing resin applied over the entire surface is cured.

Next, the stamper member 14 is exfoliated while the spacer layer 13a is left on the side of the disc-shaped substrate 11. Then, as shown in FIG. 4A, a rotational roller 8 is disposed so that a rotational axis 8a thereof is inclined to the surface of the spacer layer 13a. The disc-shaped substrate 11 is placed on the stage 2 shown in FIGS. 1 and 2 and then rotated. A material of the rotational roller 8, which preferably has high hardness and also has durability against the resin, is preferably, for example, stainless steel, glass and so on.

Subsequently, as shown in FIG. 4B, the inclined rotational roller 8 is rotated about its rotational axis 8a while rotating the disc-shaped substrate 11 on the stage. Then, the inclined rotational roller 8 is made close to an angular portion 13d of the spacer layer 13a on the disc-shaped substrate 11 while being pressed against this angular portion 13d, and is so moved as to slide in an oblique downward direction S as viewed in FIG. 4B.

As described above, the rotational roller 8 is pressed against the angular portion 13d and moved in the oblique downward direction S, thereby enabling the angular portion 13d of the spacer layer 13a to be crushed so that a recessed portion 13e with an inclination is formed at the angular portion 13d of the spacer layer 13a. In this case, the rotational roller 8 is moved outwardly of the outer peripheral edge portion of the spacer layer 13a while being pressed against the angular portion 13d, thereby producing none of cutting wastage. Further, though a burr 13f is formed on an outer peripheral edge face of the disc-shaped substrate 11, the burr or the like does not occur on the surface of the spacer layer 13a, resulting in no defect of the spacer layer 13a. Moreover, even if the burr 13f occurs on the outer peripheral edge face, this does not affect the formation of the translucent layer thereafter.

Next, in the same manner as FIG. 3B shows, the resin material is discharged as droplets along the vicinity of the inner periphery of the spacer layer 13a, and the disc-shaped substrate 11 is rotated at the high speed, whereby the translucent layer 16 is, as in the case of FIG. 3C, formed up to a predetermined thickness over the spacer layer 13a by the spin coating process.

The single-sided 2-layered type optical disc as shown in FIG. 6A can be manufactured. In this type of optical disc, however, when the translucent layer 16 is formed on the spacer layer 13a by the spin coating process, the swelling portion 16b has hitherto been formed at the outer peripheral edge portion of the translucent layer 16 as indicated by a broken line in FIG. 6B, and a height "h" of this swelling might exceed 10 µm. According to the second embodiment, however, this swelling portion 16b is absorbed by the recessed portion 13b, and hence the outermost peripheral portion 16a of the translucent layer 16 does not come to have the swelling seen in FIG. 6B, thereby making it possible not to be affected by the swelling portion of the translucent layer 16 and to restrict the height of the swelling portion at the outermost peripheral portion 16a of the translucent layer 16 as well. Accordingly, this contrivance can meet the height standards of the swelling portion.

For example, a lathe or the like is, it is considered, used for mechanically forming the recessed portion 13e with the inclination in the angular portion 13d of the spacer layer 13a. Wastage is, however, produced when cut away by the lathe, etc., or the burr occurs on the cut-away surface and is adhered to the spacer layer 13a, which is easy to become a defect undesirably.

### <Third Embodiment>

FIGS. 5A to 5C are side sectional views each showing a process of manufacturing the 2-layered optical disc in a third embodiment.

The third embodiment exemplifies a method of manufacturing the single-sided 2-layered type optical disc. The optical disc is manufactured in the same processes as those in the second embodiment except the method of forming the recessed portion in the outer peripheral edge of the spacer layer on the disc-shaped substrate as compared with the second embodiment.

Namely, the disc-shaped substrate 11 formed with the spacer layer 13a in FIG. 5A is obtained in the same way as in the second embodiment. Then, as shown in FIG. 5B, a laser 9 for emitting a laser beam is disposed so that the angular portion 13d of the spacer layer 13a on the disc-shaped substrate 11 is irradiated with the laser beam thereof. The laser 9 emits the laser beam in an oblique direction L indicated by an arrowhead as viewed in FIG. 5B toward the surface of the spacer layer 13a.

The disc-shaped substrate 11 is placed on the stage 2 shown in FIGS. 1 and 2, and the angular portion 13d of the spacer layer 13a is irradiated with the laser beam emitted in the oblique direction L as shown in FIG. 5B from the laser 9 while rotating the disc-shaped substrate 11. The angular portion 13d is trimmed by the irradiation of the laser beam, thereby forming, as shown in FIG. 5C, the recessed portion 13e with the inclination in the vicinity of the angular portion 13d of the spacer layer 13a. In this case, since the angular portion 13d is trimmed by the irradiation of the laser beam, the occurrences of the cutting wastage and the burr can be restrained, and therefore nothing affects the formation of the translucent layer thereafter.

Next, in the same way as FIG. 3B shows, the resin material is discharged as droplets along the vicinity of the inner periphery of the spacer layer 13a, and the disc-shaped substrate 11 is rotated at the high speed, whereby the translucent layer 16 is, as in the case of FIG. 3C, formed up to a predetermined thickness over the spacer layer 13a by the spin coating process.

The single-sided 2-layered type optical disc as shown in FIG. 6A can be manufactured in the manner described above. In this type of optical disc, however, when the translucent layer 16 is formed on the spacer layer 13a by the spin coating process, the swelling portion 16b has hitherto been formed at the outer peripheral edge portion of the translucent layer 16 as indicated by the broken line in FIG. 6B, and the height h of this swelling might exceed 10 µm. According to the third embodiment, however, this swelling portion 16b is absorbed by the recessed portion 13e, and hence the outermost peripheral portion 16a of the translucent layer 16 does not come to have the swelling seen in FIG. 6B, thereby making it possible not to be affected by the swelling portion of the translucent layer 16 and to restrict the height of the swelling portion at the outermost peripheral portion 16a of the translucent layer 16 as well. Accordingly, this contrivance can meet the height standards of the swelling portion.
the laser 9 usable for the trimming process involves using a CO₂ laser, etc., and a usable laser is specifically a CO₂ laser marker (ML-G9300) offered by Keyence Corporation, etc..

### <Examples>

Next, the method of manufacturing the single-sided 2-layered type optical disc in the first embodiment, which has been explained with reference to FIGS. 1A through 3C, will be described more specifically by way of examples.

To start with, the recording layer is formed on the disc-shaped substrate 11 as below. The disc-shaped substrate is composed of polycarbonate and formed with the central hole whose diameter is 15 mm, and is 120 mm in diameter and 1.2 mm in thickness. A hyperfine rugged groove based on a groove recording system is formed in this disc-shaped substrate. A groove width thereof is on the order of 160 nm (a track pitch is 0.32 µm), and its depth is set to 20 nm.

Then, the reflection layer composed of Al₉₈Pd₁Cu₁ (atomic ratio) is formed up to a layer thickness of 100 nm on the groove surface of the disc-shaped substrate by a sputtering method. Next, a second dielectric layer composed of ZnS-SiO₂ (80:20) is formed up to a layer thickness of 40 nm by the sputtering method. Subsequently, an alloy layer composed of CuAlAu (64:23:13) is formed up to a layer thickness of 5 nm on the surface of the second dielectric layer by the sputtering method. Next, a Si layer is formed up to a layer thickness of 5 nm by the sputtering method, whereby the recording layer structured of these respective layers is acquired. Subsequently, a first dielectric layer composed of ZnS-SiO₂ (80:20) is formed up to a layer thickness of 20 nm on the surface of the recording layer by the sputtering method.

Next, the disc-shaped substrate formed with the recording layer is fixed via its central hole to the stage, and thereafter a resin mixture containing the ultraviolet curing resin (which will hereinafter be abbreviated to a [2P resin] as the case may be) is spin-coated up to a layer thickness of 25 µm over the first dielectric layer. This 2P resin involves using the following mixture.
· Kayaradd R-167 (made by Nippon Kayaku Co., Ltd.): 60 mass part (ECH modification 1, 6-hexanedioldiacrylate)
· Aronix M-309 (made by Toagosei Co., Ltd.): 30 mass part (trimethylolpropaneacrylate)
· THF-A (Kyoueisha Chemical Co., Ltd.): 10 mass part (tetrahydrofurfurylacrylate)
· Irugacure184(Chiba Special Chemicals Co., Ltd.): 3 mass part (1-hydroxycichlohexylphenylketone)
the aforementioned 2P resin having a viscosity that is on the order of 700 Pa·s, was spin-coated under the condition of 4000 rpm X 10 sec.

Next, there is formed a transparent resin stamper (made by Zeon Corporation, Zeonex resin) having a diameter of 130 mm and a thickness of 1. 2 mm and including a hyperfine rugged groove that is 0.16µm in width (a track pitch is 0.32µm) and is 20 nm in depth. This transparent resin stamper is superimposed on the disc-shaped substrate so as not to contain any air bubbles. Thereafter, the transparent resin stamper is irradiated with the ultraviolet rays with intensity on the order of 1000 mJ/cm², thereby curing the 2P resin. At this time, the irradiation of the ultraviolet rays is effected on within an area having a diameter of 119 mm, and the outermost peripheral portion remains uncured.

Next, the disc-shaped substrate onto which the transparent stamper was pasted is rotated for 4 sec at a speed as low as approximately 500 rpm, and, in the meantime, ethanol is discharged over a boundary area between the disc-shaped substrate and the stamper, thereby washing the uncured 2P resin away. Thereafter, spin-drying is conducted for 5 sec at a speed as high as about 4000 rpm. Ethanol is discharged for 2 sec with a pressure 0.8 kgf/cm² as a condition applied herein. Through theses processes, only the uncured 2P resin is washed away, and, after forming a gap between the disc-shaped substrate and the stamper, the transparent stamper is exfoliated from an interface with the cured 2P resin. Then, the groove formed in the transparent resin stamper is transferred onto the surface of the 2P resin, thereby forming a 2P spacer layer having the groove.

Next, a second dielectric layer composed of ZnS-SiO₂ (80:20) is formed up to a layer thickness of 25 nm on the groove surface of the 2P spacer layer by the sputtering method. Subsequently, an alloy layer composed of CuAlAu (64:23:13) is formed up to a layer thickness of 5 nm on the surface of the second dielectric layer by the sputtering method. Next, a Si layer is formed up to a layer thickness of 5 nm by the sputtering method, whereby the recording layer structured of these respective layers is acquired. Subsequently, a first dielectric layer composed of TiO₂ is formed up to a layer thickness of 30 nm on the surface of the recording layer by the sputtering method.

Next, the ultraviolet curing resin (SSP50U10, having a viscosity of 1,900 cP at 25°C, made by Shouwa High Polymer Co., Ltd.) is coated up to approximately 75 µm by the spin coating process. Then, the ultraviolet curing resin is irradiated with the ultraviolet rays with intensity of 2000 mJ/cm² and is thereby cured, and a light transmissive layer is formed. A sample of the single-sided 2-layered optical disc is thus manufactured. As a result, a height of the light transmissive layer of the optical disc at the outermost peripheral portion was less than 10 µm.
a UV lamp used as a ultraviolet light source for curing the 2P resin is BHG-750 made by Mejiro Precision Corp., and the irradiation range is adjusted by changing a distance between the disc-shaped substrate and the ultraviolet light source.

Further, the solvent used in the washing process is preferably a solvent that dissolves neither the disc-shaped substrate nor the stamper. Normally PC (polycarbonate) is often utilized in the optical disc, and therefore the preferable solvent is a solvent that does not dissolve PC. For example, there can be utilized alcohol-series solvents such as methanol, ethanol, propanol, isopropanol, etc. and also hydrocarbon-series solvents such as hexane, cyclohexane and so on. Among these solvents, one or more solvents may be mixed. In terms of workability and security, however, it is preferable that the alcohol-series solvents be used.

Moreover, the solvent is required to be dried after the spin coating, and hence a preferable solvent has a boiling point that is equal to higher than 60°C but equal to or lower than 140°C. In terms of being proper to the spin coat, the boiling point is preferably equal to higher than 70°C but equal to or lower than 120°C.

Furthermore, the number of rotations of the stage when washing is preferably equal to higher than 100 rpm but equal to or lower than 1000 rpm. If equal to or lower than 100 rpm, a large discharge amount of the solvent is needed, and besides the cycle is retarded. Moreover, if equal to or higher than 1000 rpm, the solvent is hard to permeate between the disc-shaped substrate and the stamper member in terms of a relationship with a centrifugal force, with the result that the washing effect decreases.

Further, the number of rotations of the stage when washing is preferably within a range of being equal to or higher than 300 rpm but equal to or lower than 800 rpm. When setting in this range, a proper centrifugal force is applied, and the solvent is rotated off without any contamination of the disc-shaped substrate. Further, this range is sufficient in terms of cycle and enables a usage amount of solvent to be restrained.

The best mode for carrying out the present invention and the examples thereof have been described so far, however, the present invention is not limited to the aforementioned best mode and examples and can be modified in a variety of forms within the scope of the technical concept of the present invention. For example, the optical disc manufacturing method according to the present invention is applied to the manufacture of the single-sided 2-layered optical disc in each mode described above and may also be applied to a multi-layered, i.e., 3- or more-layered optical disc. Furthermore, the present invention may be applied to the manufacture of optical discs other than the multi-layered optical disc.

Moreover, the spin coating process according to the present invention can be, as a matter of course, applied to, other than the optical disc manufacturing method, a case of eliminating the influence of the swelling on the outer periphery when performing the spin coating.

Still further, the present embodiment and the examples have exemplified the ultraviolet curing resin as an energy beam curing resin in the present invention. The energy beam curing resin is not, however, limited to this ultraviolet curing resin and may include an electron beam curing resin and so on. The electron beams, etc. other than the ultraviolet rays described above can be given as energy beams corresponding thereto.

## Claims

1. A spin coating process comprising:
a step of spin-coating an energy beam curing resin over a resin-formed surface of a disc-shaped member;
a step of irradiating said resin-formed surface spin-coated with the energy beam curing resin with an energy beam except the vicinity of an outer peripheral edge thereof; and
a step of removing an uncured portion of the energy beam curing resin by applying a solvent to the vicinity of the outer peripheral edge of said resin-formed surface.

2. A spin coating process according to claim 1, further comprising a step of further effecting the spin coat to form a different resin layer after forming a layer on a resin layer formed by curing the energy beam curing resin subsequently to said step of removing the uncured portion.

3. A method of manufacturing a disc-shaped recording medium, comprising:
a step of forming a resin layer having a recording face on a disc-shaped substrate;
a step of forming a recessed portion in the vicinity of an outer peripheral edge of the resin layer of said disc-shaped substrate; and
a step of forming a recording layer on said resin layer and forming a light transmissive layer on said recording layer.

4. A method of manufacturing a disc-shaped recording medium, comprising:
a step of forming a first recording layer on a first recording face formed on a disc-shaped substrate, and thereafter interposing an energy beam curing resin between said first recording layer on said disc-shaped substrate and a stamper member having a transfer face in a state where said stamper member faces said first recording layer;
a step of irradiating said energy beam curing resin with an energy beam between said first recording layer on said disc-shaped substrate and said stamper member except the vicinity of an outer peripheral edge of said disc-shaped substrate;
a step of removing an uncured portion of said energy beam curing resin by applying a solvent from the side of an outer peripheral edge face between said disc-shaped substrate and said stamper member;
a step of exfoliating said stamper member from said disc-shaped substrate so that a spacer layer formed between said disc-shaped substrate and said stamper member is exposed from said energy beam curing resin; and
a step of forming a second recording layer on a second recording face of said spacer layer which is transferred from the transfer face of said stamper member, and thereafter forming a light transmissive layer on said second recording layer by the spin coating.

5. A method of manufacturing a disc-shaped recording medium according to claim 4, further comprising a step of further removing an uncured portion of the energy beam curing resin by applying a solvent to the vicinity of the outer peripheral edge of said spacer layer of said disc-shaped substrate after said exfoliating step.

6. A method of manufacturing a disc-shaped recording medium according to claim 4 or 5, wherein a recessed portion including none of said spacer layer is formed corresponding to the uncured portion in the vicinity of the outer peripheral edge of said disc-shaped substrate.

7. A method of manufacturing a disc-shaped recording medium, comprising:
a step of forming a first recording layer on a first recording face formed on a disc-shaped substrate, and thereafter interposing an energy beam curing resin between said first recording layer on said disc-shaped substrate and a stamper having a transfer face member in a state where said stamper member faces said first recording layer;
a step of irradiating said energy beam curing resin with an energy beam between said first recording layer on said disc-shaped substrate and said stamper member;
a step of exfoliating said stamper member from said disc-shaped substrate so that a spacer layer formed between said disc-shaped substrate and said stamper member is exposed from said energy beam curing resin;
a step of crushing the outer peripheral edge portion by moving a rotational roller outwardly of the outer peripheral edge portion while pressing said rotational roller against the outer peripheral edge portion of said spacer layer; and
a step of forming a second recording layer on a second recording face of said spacer layer which is transferred from the transfer face of said stamper member, and thereafter forming a light transmissive layer on said second recording layer by the spin coating.

8. A method of manufacturing a disc-shaped recording medium, comprising:
a step of forming a first recording layer on a first recording face formed on a disc-shaped substrate, and thereafter interposing an energy beam curing resin between said first recording layer on said disc-shaped substrate and a stamper having a transfer face member in a state where said stamper member faces said first recording layer;
a step of irradiating said energy beam curing resin with an energy beam between said first recording layer on said disc-shaped substrate and said stamper member;
a step of exfoliating said stamper member from said disc-shaped substrate so that a spacer layer formed between said disc-shaped substrate and said stamper member is exposed from said energy beam curing resin;
a step of trimming the outer peripheral edge portion by irradiating the outer peripheral edge portion of said spacer layer with a laser beam; and
a step of forming a second recording layer on a second recording face of said spacer layer which is transferred from the transfer face of said stamper member, and thereafter forming a light transmissive layer on said second recording layer by the spin coating.

9. A method of manufacturing a disc-shaped recording medium according to claim 4, 7 or 8, wherein an execution of said step of interposing the energy beam curing resin involves spin-coating the energy beam curing resin existing between said disc-shaped substrate and said stamper member in a state where said stamper member faces said disc-shaped substrate after coating the energy beam curing resin over an inner periphery of said first recording face on said disc-shaped substrate.

10. A method of manufacturing a disc-shaped recording medium according to claim 4, 7 or 8, wherein said stamper member is composed of an olefin resin exhibiting an easy-to-exfoliate property with respect to the energy beam curing resin and energy beam transmissivity.
